# EUROPÄISCHE PATENTSCHRIFT

(11) **EP 0 706 643 B1**
(45) Veröffentlichungstag und Bekanntmachung des Hinweises auf die Patenterteilung: **27.01.1999**
(21) Anmeldenummer: 94921633.7
(22) Anmeldetag: 29.06.1994
(51) Int. Cl.: G01G 19/414

(54) **ELEKTRONISCHE LEBENSMITTELWAAGE**
ELECTRONIC FOODSTUFF BALANCE
BALANCE ALIMENTAIRE ELECTRONIQUE

(30) Priorität: 29.06.1993 DE 4321600
(43) Veröffentlichungstag der Anmeldung: 17.04.1996
(73) Patentinhaber: Hamm, Manfred R., D-82441 Ohlstadt (DE)
(72) Erfinder: Hamm, Manfred R., D-82441 Ohlstadt (DE)
(74) Vertreter: Weber, Otto Ernst, Dipl.-Phys.
(86) Internationale Anmeldenummer: EP9402109
(87) Internationale Veröffentlichungsnummer: WO9501553

(56) Entgegenhaltungen:
- EP-A- 0 196 277
- AU-B- 575 780
- DE-A- 3 338 430
- US-A- 5 033 561
- US-A- 5 233 520

## Beschreibung

Die Erfindung betrifft eine elektronische Lebensmittelwaage mit einer Auswerteeinheit, durch welche aus den Gewichten der gewogenen Lebensmittel deren Energiewerte zu ermitteln sind, mit einer Anzeigeeinrichtung, mit einer Eingabeeinrichtung zum Eingeben der zu wiegenden Lebensmittel mit einem elektronischen Speicher, in welchem die Energiewerte einer Vielzahl von Lebensmitteln und eine Anzahl von Diätplänen abgespeichert sind, so daß die Diätpläne zur Auswahl durch einen Benutzer an der Anzeigeeinrichtung wiedergegeben werden können, mit einer Vergleichseinrichtung, mit welcher die Energiewerte der gewogenen Lebensmittel mit Energiewerten aus Diätplänen zu vergleichen sind, welche für eine bestimmte Person einzuhalten sind, mit einer Übergewichts-Warneinrichtung, durch welche ein Überschreiten eines im Diätplan vorgesehenen Gewichts-Grenzwertes angezeigt wird, und mit einer Lese-Einrichtung zum Einlesen einer Schreibeinrichtung sowie zum Ausgeben von Daten.

Eine derartige elektronische Waage ist aus der Druckschrift EP 0 196 277 A2 und A3 bekannt.

Diese bekannte Waage bietet zwar durch Berücksichtigung von Energiewerten eine Groborientierung, sie ist jedoch im Hinblick auf eine ausgewogene Ernährung unzureichend. Sie gibt dem Benutzer zwar Aufschluß über den Kaloriengehalt und die Nährstoffdichte, bezogen auf zum Beispiel Kohlenhydrate, Fett und Eiweiß und erlaubt ferner die für Diabetiker wichtige Umrechnung in Broteinheiten. Als nachteilig kann jedoch angesehen werden, daß die Waage andere für die Zusammenstellung einer ausgewogenen Ernährung wichtigen Parameter nicht anzeigt. Es sind weder kritische Parameter wie Cholesterin oder Protein noch Vitamine oder Mineralstoffe entnehmbar. Selbst wenn der Benutzer in der Lage wäre, die für ihn wichtigen Werte zu errechnen, kann er die Waage nicht als Hilfsmittel benützen, weil derartige Angaben vollständig außer Acht gelassen sind. Diese Waage ist im Hinblick auf klassische Reduktionsdiäten konzipiert und stellt über diese Anwendung hinaus kein Hilfsmittel für eine gesunde Nahrungszusammenstellung dar.

Der Erfindung liegt die **Aufgabe** zugrunde, eine Lebensmittelwaage der eingangs genannten Art zu schaffen, welche bei einfachster Bedienung eine besonders flexible Nahrungsmittelzusammenstellung für eine ausgewogene Nährstoffdichte bei der Prävention, der Unterstützung der kurativen und palliativen medikamentösen Therapie von Stoffwechsel- und organischen Erkrankungen sowie deren Behandlung durch eine gezielte Zufuhr von Nährstoffen ermöglicht, die auf Erkenntnissen der modernen Ernährungsmedizin beruht.

Es sollen eine gesunde Ernährung unterstützt und krankheitsbedingte Diäterfordernisse berücksichtigt werden. Dazu sollen dem Verbraucher nicht nur das Gewicht der Nahrungsmittel angezeigt, sondern darüber hinaus auch Informationen über die Nährstoffparameter gegeben werden, damit eine gesundheitsbewußte Ernährung gezielt durchgeführt werden kann.

Diese Aufgabe wird erfindungsgemäß dadurch gelöst,
daß in dem elektronischen Speicher zusätzlich zu den Energiewerten weitere ernährungsrelevante Parameter wie Nährstoffwerte von Cholesterin, Proteinen, Vitaminen und/oder Mineralstoffen gespeichert sind,
daß durch die Auswerteeinheit die Kompatibilität eines gewogenen Lebensmittels mit einem entsprechenden Lebensmittel in einem oder mehreren ausgewählten Diätplänen ermittelbar und das AuswerteErgebnis an der Anzeigeeinrichtung wiedergebbar ist,
daß eine Einrichtung zum Einschreiben von Auswerte-Ergebnissen in vorgegebene Bereiche einer Speicherkarte vorhanden ist,
daß eine Inkompatibilitäts-Warneinrichtung vorgesehen ist, von welcher bei Inkompatibilität eines gewogenen Lebensmittels mit einem vorgegebenen Diätplan ein Warnsignal kommt, und
daß eine Substitutionstaste vorhanden ist, durch deren Betätigung bei einer Lebensmittel-Inkompatibilität eine Auswahl von substituierbaren Lebensmitteln abrufbar ist.

Die Erfindung führt zu dem Vorteil, daß dem Benutzer eine umfassende Aufschlüsselung der Nährstoffdichte der gewogenen Nahrung, bezogen auf alle unter ernährungsmedizinischen Gesichtspunkten wichtigen Nährstoffinhalte, geboten wird. Weiterhin kann der Benutzer die individuellen Richtwerte seiner Ernährungserfordernisse mittels des separaten Datenträgers eingeben, dessen Inhalt ständig aktualisierbar ist oder welcher durch andere Datenträger ersetzt und ergänzt werden kann. Die erfindungsgemäße elektronische Waage schafft die Möglichkeit, die Kompatibilität einzelner Lebensmittel mit deren Zusammenstellung in einer Mahlzeit aufgrund der persönlichen Richtwerte des Benutzers zu überprüfen. Er wird dabei durch verschiedene, Funktionen und Anzeigen der Lebensmittelwaage unterstützt. So kann er im Hinblick auf einzelne "verbotene" Nahrungsmittel oder die Über/Unterschreitung seine individuellen Richtwerte oder persönlichen diätetischen Zielgrößen verfolgen.

Vorteilhafte Weiterbildungen und bevorzugte Ausführungsformen des Erfindungsgegenstandes ergeben sich aus den Unteransprüchen.

Insbesondere kann vorzugsweise vorgesehen sein, daß ein Laufwerk für eine Compact Disc vorhanden ist, auf der Kochrezepte enthalten sind, und daß die abgespeicherten Kochrezepte von der Auswerteeinheit nach den Kriterien des angewählten Diätplanes ausgewertet werden.

Eine weitere bevorzugte Auführungsform des Erfindungsgegenstandes zeichnet sich dadurch aus, daß die Auswertung eines gewogenen Lebensmittels unter Berücksichtigung verschiedener Diätpläne erfolgt. Dabei ist vorzugsweise weiterhin vorgesehen, daß an der Anzeigevorrichtung eine Angabe über die den unterschiedlichen Diätplänen entsprechenden Portionsgrößen wiedergegeben wird.

Eine weitere vorteilhafte Ausführung des Erfindungsgegenstandes zeichnet sich dadurch aus, daß die Anzeigevorrichtung ein LCD-Bildschrirm ist.

Eine weitere vorteilhafte Weiterbildung des Erfindungsgegenstandes sieht vor, daß eine Auswahlvorrichtung vorgesehen ist, die als Tastenfeld ausgebildet ist. Dabei ist die Anordnung vorteilhafterweise derart getroffen, daß das Tastenfeld als Folientastatur ausgebildet ist.

Eine weitere vorteilhafte Weiterbildung des Erfindungsgegenstandes sieht vor, daß eine Produktwahltaste vorgesehen ist, mit der die Lebensmittel gattungsmäßig vorwählbar sind.

Schließlich kann vorzugsweise die Anordnung auch derart getroffen sein, daß eine Scrolltaste zur Lebensmittelauflistung einschließlich unterschiedlicher Zubereitungsarten auf dem Bildschirm vorgesehen ist.

Aufgrund der Aggregierungsfunktion für alle Parameter schafft die Lebensmittelwaage auch einen Überblick über einen Diätstatus des Benutzers im Verlauf seiner Nahrungsmittelauswahl und versetzt ihn damit in die Lage, schon bei der Zusammenstellung seiner Mahlzeit deren einzelne Komponenten gezielt zu variieren. Weiterhin hilft die Aggregierungsfunktion, Nährstoffdefizite oder Überschüsse zu erkennen und diese entweder durch Nährstoffsupplemente zu kompensieren oder durch weitere Modifikation der Lebensmittelauswahl abzubauen.

All dies erfordert weder eigenhändige Kalkulationen noch mühsames Aufnotieren der einzelnen Meßwertparameter oder die Suche nach Nahrungsmittelcodes in gedruckten Informationen. Die Funktionsarchitektur der Lebensmittelwaage stellt dem Benutzer alle relevanten Nährstoffdaten in absoluten Zahlen und als Prozente der Normwerte oder seiner persönlichen Richtwerte zur Verfügung, kalkuliert für ihn seinen augenblicklichen Ernährungsstatus und alarmiert ihn bei Defiziten und Überschüssen. Durch diese Information kann der Benutzer seinen täglichen Ernährungsplan bewußt gestalten und ist zudem nicht mehr auf allzu restriktive Ausschlußdiäten begrenzt. Er wird vielmehr in die Lage versetzt, sein Tagesziel durch intelligentes Austarieren der Nährstoffinhalte einzelner Lebensmittel und deren Zusammenstellung zu erreichen.

Ein weiterer Vorteil des Erfindungsgegenstandes besteht darin, durch die Speicherung der Nährstoffinhalte vieler handelsüblicher Fertigwaren eine Vielzahl von Lebensmitteln in seine Diätpläne mit einzubeziehen. Dies wird bevorzugt dadurch erreicht, daß von einem Datenträger, insbesondere Compact Disc (CD), gespeicherte Kochrezepte auf deren Nährstoffdichte und Kompatibilität mit den individuellen Richt- oder Zielgrößen eingelesen und überprüft werden. Grundsätzlich kann das Lesegerät zum Lesen des Datenträgers separat ausgebildet und über ein Kabel mit der Lebensmittelwaage verbunden sein. Es ist jedoch besonders vorteilhaft, wenn das Lesegerät in die Lebensmittelwaage integriert ist.

Eine besonders vorteilhafte Ausgestaltung der Waage besteht darin, daß eine Schnittstelle zum Lesen und Beschreiben einer Speicherkarte vorhanden ist. Auf der Speicherkarte sind zumindest alle relevanten ernährungsphysiologischen Normwerte abgespeichert. Die Architektur der Karte ist zudem für eine Vielzahl von unterschiedlichen Diätkonzepten ausgelegt. Diese Daten können beispielsweise von Ärzten, Heilpraktikern und Apotheken bereitgestellt und eingespeichert werden. Ferner können auf ihr Daten von Reformhäusern, Naturkostläden, Ernährungswissenschaftlern und so weiter zur Verfügung bereit gehalten werden.

Da die auf der Speicherkarte enthaltenen Daten grundsätzlich unbegrenzt modifiziert oder gelöscht werden können, erhält der Inhaber eine große Flexibilität, seine Diätpläne sich ändernden Lebensumständen aber auch neuen ernährungswissenschaftlichen Erkenntnissen auf einfache Weise und kostengünstig anzupassen.

Die mit dem Beschreiben von Speicherkarten autorisierten und mit einem Lesegerät ausgerüsteten Personen und Einrichtungen bringen die zur Individualisierung erforderlichen Daten des Benutzers auf die Speicherkarte auf, beispielsweise seine persönlichen Daten, das heißt Alter, Größe, Gewicht und Geschlecht. Mit Hilfe dieser Basisinformation werden therapeutisch notwendige oder angestrebte Ernährungsformen individuell für den Anwender unter Berücksichtigung der einzelnen Parameter errechnet und abgespeichert.

Neben diesen extern eingespeicherten Daten werden bei jeder Benutzung der Lebensmittelwaage die Ergebnisse des Auswiegevorganges, gemessen an den Erfordernissen des Diätplanes, von der Lebensmittelwaage auf die Speicherkarte aufgelesen. Die Speicherkarte ist also in der Lage, die Überschüsse und Defizite gemäß des ausgewählten Diätplanes über einen vorgegebenen Zeitraum zu speichern.

Es können auf einer einzigen Speicherkarte grundsätzlich die individuellen Daten einer einzigen Person oder auch von verschiedenen Personen abgespeichert werden. Dies gestattet die Benutzung einer einzigen Speicherkarte, beispielsweise innerhalb einer Familie. Es können also die Meßwerte aller Lebensmittel, vollständiger Mahlzeiten und der täglichen Nahrungsaufnahme entsprechend der mittels der Speicherkarte eingelesenen Diätpläne einer Personengruppe bewertet werden. Auf diese Weise können bereits bei der Nahrungszubereitung die Nährstofferfordernisse mehrerer Personen berücksichtigt werden, Portionsgrößen individuell berechnet oder auch Nährstoffdefizite einzelner Personen pro Mahlzeit oder auf den gesamten Tagesplan bezogen ausgewiesen werden.

Die hierdurch erzielte Flexibilität vereinfacht die Nahrungszubereitung in einem Haushalt, in dem unterschiedliche diätetische Schwerpunkte verfolgt werden, ohne wie bisher bestimmte Personen vom gemeinsamen Speiseplan a priori ausgrenzen zu müssen.

Die Speicherkarte hat ferner den Vorteil, daß sie ein Benutzer grundsätzlich bei beliebigen gleichartigen Lebensmittelwaagen oder zumindest geeigneten Lese-/Schreibgeräten verwenden kann. Er ist nicht auf die Verwendung bei seiner eigenen Lebensmittelwaage beschränkt, sondern kann auch auf Reisen, bei Restaurantbesuchen und so weiter seine Ernährungsbedürfnisse realisieren.

Ferner können die vorstehend erwähnten, mit der Aktualisierung von Diätplänen befaßten Personen die von der Lebensmittelwaage auf die Speicherkarte aufgebrachten aktualisierten Daten überprüfen und auswerten.

Das hat aus therapeutischer Sicht den Vorteil, daß beispielsweise ein Arzt die Einhaltung von Diätvorschriften durch seinen Patienten regelmäßig überprüfen kann. Eine in die Lebensmittelwaage eingebaute Uhr- und Kalenderfunktion, welche beim Beschreiben der Speicherkarte mit abgespeichert wird, erleichtert eine Systematisierung dieser Aufgabe.

Dies gestattet dem Arzt oder einem anderen Berater, rechtzeitig und wirksam gegenzusteuern und mögliche Ursachen für einen mangelden Therapieerfolg, beispielsweise die Nichteinhaltung der Diätvorschriften, festzustellen.

Nachfolgend wird die Erfindung anhand von zwei in der Zeichnung dargestellten Ausführungsbeispielen weiter beschrieben.

Es zeigen schematisch:
- Fig.1: Eine perspektivische Ansicht einer ersten Lebensmittelwaage in einem betriebsbereiten Zustand;
- Fig.2: eine Seitenansicht einer zweiten Lebensmittelwaage in einem betriebsbereiten Zustand;
- Fig.3: eine Seitenansicht der Lebensmittelwaage gemäß Figur 2 in einem Ruhezustand; und
- Fig.4: ein Flußdiagramm mit den einzelnen Funktionen einer Lebensmittelwaage.

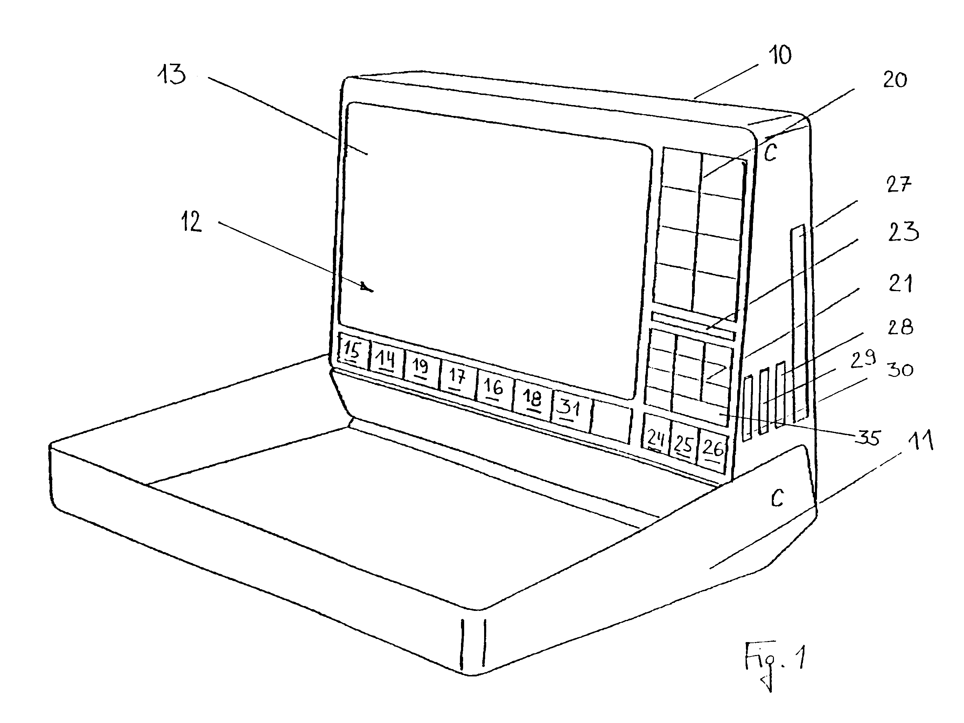

Die in Figur 1 dargestellte Lebensmittelwaage besteht aus einem Gehäuse 10, das an der Wand montiert werden kann. Eine Waagschale 11 ist klappbar am Gehäuse 10 angelenkt und umschließt im Ruhezustand das gesamte Gehäuse 10 an der Vorderseite und den Schmalseiten.

In dem gezeigten Betriebszustand ist die Waagschale 11 in eine horizontale Position heruntergeklappt, so daß sie eine Benutzeroberfläche 12 mit allen Bedien- und Anzeigeelementen der Lebensmittelwaage freigibt. Die Benutzeroberfläche 12 ist mit einer pflegeleichten, abwaschbaren Kunststoffbeschichtung bedeckt. Sie weist als eine Anzeigeeinrichtung 13 einen Bildschirm, beispielsweise einen LCD-Bildschirm, auf. Die Betätigung der einzelnen Funktionen erfolgt über Eingabeeinrichtungen wie eine Scrolltaste 14, eine Eingabetaste 15, eine Speichertaste 16, eine Vergleichtaste 17, eine Auswertetaste 18 sowie eine Substitutionstaste 19. Ferner sind zusätzlich zu diesen Funktionstasten eine Anzahl von Produktvorwahltasten 20 vorhanden einschließlich einer Zahlentastatur 21 mit einer Backspacetaste 22.

Die Produktvorwahltasten 20 dienen dazu, die zu wiegenden Lebensmittel gattungsmäßig vorzuwählen. Sie sind zur Erkennung entweder alphanumerisch beschriftet oder mit einem Lebensmittelsymbol versehen. Nach der Vorauswahl einer Lebensmittelgattung mittels einer dieser Tasten wird auf dem Bildschirm eine spezifizierte Auflistung wiedergegeben. Mittels der Scrolltaste 14 können mehrere Anzeigeseiten nacheinander vollständig dargestellt werden. Diese Auflistung ( Lebensmittelauflistung) ordnet jedem Lebensmittel eine Lebensmittelkennzeichnung zu, wobei hier auch noch unterschiedliche Zubereitungsarten angegeben sind. Die endgültige Auswahl erfolgt in dem dargestellten Beispiel mit der Zahlentastatur 21. Alternativ kann auch eine Auswahl mittels einer sogenannten Maus oder eines elektronischen Stiftes vorgesehen sein (nicht dargestellt).

Die Lebensmittelwaage 10 weist ferner einen Aufnahmeschlitz 23 zum Einführen einer Speicherkarte (Smart Card) sowie Funktionstasten für ein zugehöriges Speicherkartenleseschreibgerät auf, die als Eingabetaste 24, Löschtaste 25 und Einlesetaste 26 bezeichnet sind.

Mit der Eingabetaste 24 wird der Speicherinhalt einer eingeführten Speicherkarte in einen waagenseitigen Datenspeicher (nicht dargestellt) übernommen, so daß die waagenseitige Auswerteeinheit darauf zugreifen kann. Mit der Löschtaste 25 werden Speicherinhalte von der Speicherkarte gelöscht wobei der Benutzer nur vorgegebene Speicherinhalte modifizieren und/oder löschen darf. Das Einlesen von Daten aus dem waagenseitigen Speicher erfolgt mit der Einlesetaste 26.

Ferner ist ein Laufwerk 27 für CD-Speicherplatten vorgesehen, welches über die Funktionstasten der Waage betätigbar ist. Über diese Vorrichtung können beispielsweise Kochrezepte eingelesen und unter diätetischen Gesichtspunkten durch die Auswerteeinheit analysiert werden.

In dem dargestellten Beispiel weist die Lebensmittelwaage ferner eine parallele und zwei serielle Datenanschluß-Schnittstellen 28, 29, 30 sowie eine Fax-/ Modem-Sendetaste 31 auf. Bei Anschluß eines entsprechenden Geräts kann auf diese Weise eine Datenübertragung, auch bidirektional mit externen Einheiten erfolgen. Es ist auch möglich, einen Drucker (nicht dargestellt) anzuschließen, so daß die von der Auswerteeinheit ermittelten Angaben ausgedruckt werden können, beispielsweise in Form eines Einkaufszettels. Als weitere Möglichkeit bieten Schnittstellen 28,29,30 eine Vernetzung mit ergänzenden Meß- und/oder Dosiergeräten, um Nährstoffdefizite ausgleichen zu können.

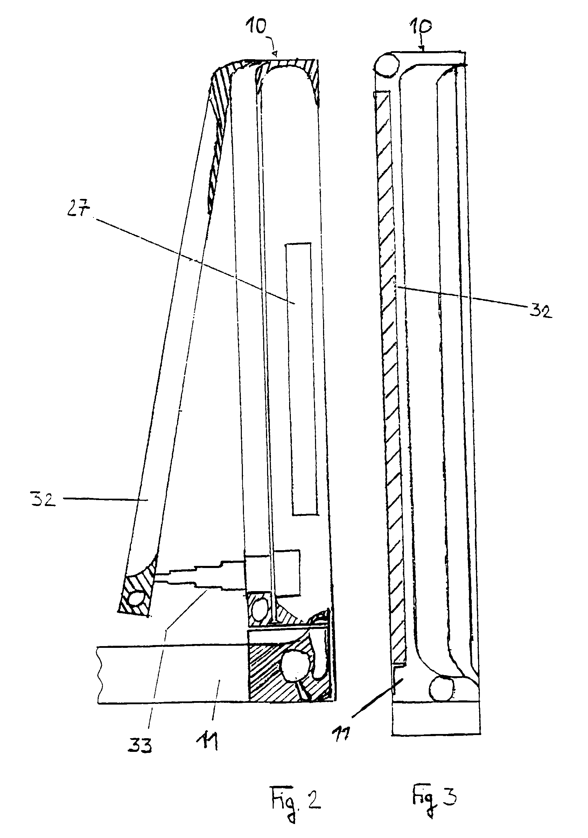

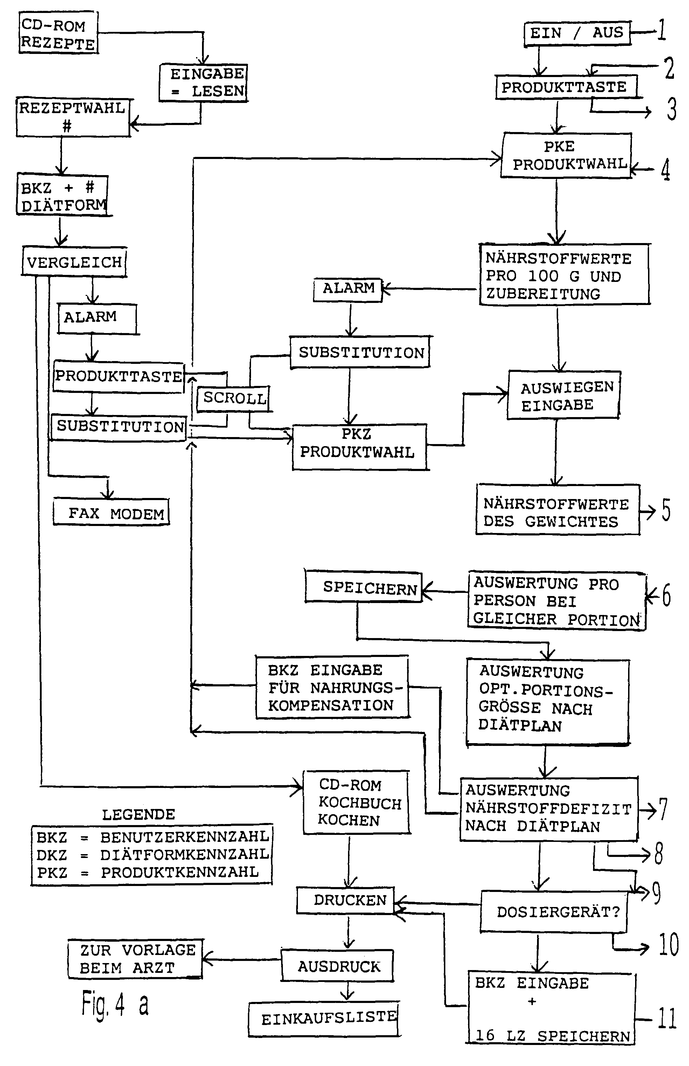

Das in Fig.2 und Fig.3 dargestellte Beispiel unterscheidet sich von dem vorstehend beschriebenen Beispiel lediglich dadurch, daß der Bildschirm sowie alle Bedienungselemente auf einem nach oben abschwenkbaren Rahmen 32 angeordnet sind. Fig.2 zeigt die ausgeschwenkte Stellung, in welcher der Rahmen 32 eine leicht geneigte Stellung einnimmt, um die Bedienung und das Ablesen zu erleichtern. Er wird in dieser Stellung von einer Teleskopstabführung 33 gehalten. Fig.2 zeigt die zurückgeklappte vertikale Ruhestellung.

Anhand von verschiedenen Anwendungsbeispielen wird die Lebensmittelwaage im folgenden weiter beschrieben. Vorausgesetzt werden von einem Arzt, einem medizinischen Dienstleister, dem Lebensmitteleinzelhandel, insbesondere Reformhäusern und Naturkostläden, oder einem Verlag beschriebene Speicherkarten, die jeweils für eine Person individualisiert sind.

Ferner wird eine CD als gegeben vorausgesetzt, auf welcher Kochrezepte abgespeichert sind. Das Beispiel beschreibt die Bedienungs- und Funktionsweise bei der Zusammenstellung einer Mahlzeit für vier Personen mit unterschiedlichen Diätwünschen, beispielsweise einer Kalorienreduktionsdiät, einer Schwangerschaftsdiät etc.

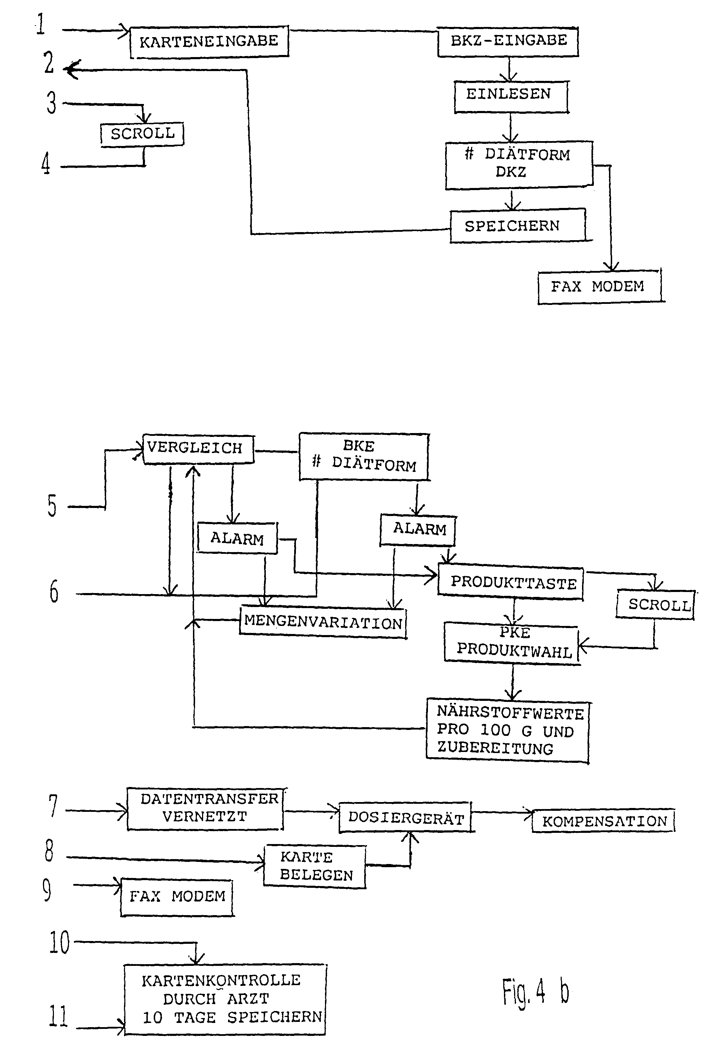

Gemäß Fig.4 liest der Anwender zunächst die Speicherkarten der vier Personen nacheinander in den Speicher der Lebensmittelwaage 10 ein, indem er vor jeder Karteneingabe eine Personenkennziffer (PKZ) in die Zahlentastatur 21 eintippt und danach eine Eingabetaste 15 drückt. Für jede Person/ Speicherkarte erscheint auf dem Bildschirm 13 eine Liste von individuellen Diätplänen. Die Auswahl erfolgt wiederum mittels Diätkennziffern (DKZ) über die Tastatur 21 und die Eingabetaste 15.

Die Diätpläne bleiben solange gespeichert und verfügbar, bis sie durch neue Diätpläne überschrieben werden. Sie müssen daher nicht bei jeder Speicherkartenbenutzung neu eingespeichert werden.

Anschließend werden die einzelnen Komponenten der Mahlzeit nacheinander ausgewogen und auf ihre Nährstoff- und Energiedichte überprüft. Nach der vorstehend beschriebenen Auswahl eines Lebensmittels einschließlich der Zubereitungsart erscheinen die diätetischen Werte bezogen auf je 100g. Damit kann auch die korrekte Codeeingabe überprüft werden.

Dann wird das Lebensmittel ausgewogen und es erscheinen die diätetischen Werte bezogen auf das Gewicht. Schon hier hat der Benutzer die Möglichkeit, durch Verändern der Lebensmittelmenge die Energie- und Nährstoffmenge zu modifizieren, indem er den Wiegevorgang mit einer anderen Menge wiederholt.

Durch Drücken der Vergleichtaste 17 können die ermittelten Werte auf einen Blick mit den Energie- und Nährstoffparametern der einzelnen Diätpläne verglichen werden. Bei Inkompatibilität eines Lebensmittels mit einem einzelnen Diätplan wird der Benutzer durch einen Alarm, beispielsweise ein Blinkzeichen, aufmerksam gemacht.

Der Benutzer kann dann eine Auswahl an Substitutionen am Bildschirm aufrufen und anzeigen lassen. Das hierbei ausgewählte Lebensmittel wird dann auf die beschriebene Art ausgewogen.

In gleicher Weise verhält es sich, wenn ein Kochrezept von einer CD eingelesen wird. Erweist es sich mit einem Diätplan als unvereinbar, wird nach einer Substitution für den kritischen Bestandteil des Kochrezepts gesucht.

Nach Abschluß des Wiegevorgangs kann der Benutzer die aggregierten Energie- und Nährstoffwerte der gesamten Mahlzeit berechnet auf vier Personen mit den Erfordernissen der einzelnen Diätformen vergleichen. Diese werden in absoluten und in Prozentwerten angegeben.

Durch Drücken der Auswertetaste 18 kann der Benutzer den Energie- und Nährstoffstatus jeder einzelnen Person bei gleicher Portionsgröße bestimmen, erhält aber auch die optimale Portionsgröße für alle vier Personen für jedes einzelne Lebensmittel berechnet.

Danach kann er durch weiteres Drücken der Auswertetaste verbleibende Energie- und Nährstoffdefizite bestimmen. Diese können durch Eingabe der PKZ und der Speichertaste 16 über einen vorgegebenen Zeitraum aggregiert werden und am Ende des Zeitraums auf die Speicherkarte aufgebracht werden. Dies erleichtert beispielsweise die Überprüfung der Diät und gegebenenfalls einen Ausgleich von Defiziten nach Kenntnisnahme durch den Arzt o.ä. oder mittels externer, kartengesteuerter Dosiergeräte.

## Patentansprüche

1. Elektronische Lebensmittelwaage mit einer Auswerteeinheit, durch welche aus den Gewichten der gewogenen Lebensmittel deren Energiewerte zu ermitteln sind, mit einer Anzeigeeinrichtung (13), mit einer Eingabeeinrichtung (14, 15, 16, 17, 18, 19, 20, 21, 22, 24, 25, 26) zum Eingeben der zu wiegenden Lebensmittel, mit einem elektronischen Speicher, in welchem die Energiewerte einer Vielzahl von Lebensmitteln und eine Anzahl von Diätplänen abgespeichert sind, so daß die Diätpläne zur Auswahl durch einen Benutzer an der Anzeigeeinrichtung (13) wiedergegeben werden können, mit einer Vergleichseinrichtung, mit welcher die Energiewerte der gewogenen Lebensmittel mit Energiewerten aus Diätplänen zu vergleichen sind, welche für eine bestimmte Person einzuhalten sind, mit einer Übergewichts-Warneinrichtung, durch welche ein Überschreiten eines im Diätplan vorgesehenen Gewichts-Grenzwertes angezeigt wird, und mit einer Lese-Einrichtung zum Einlesen sowie einer Schreibeinrichtung zum Ausgeben von Daten, dadurch **gekennzeichnet,**
a) daß in dem elektronischen Speicher zusätzlich zu den Energiewerten weitere ernährungsrelevante Parameter wie Nährstoffwerte von Cholesterin, Proteinen, Vitaminen und/oder Mineralstoffen gespeichert sind,
b) daß durch die Auswerteeinheit die Kompatibilität eines gewogenen Lebensmittels mit einem entsprechenden Lebensmittel in einem oder mehreren ausgewählten Diätplänen ermittelbar und das AuswerteErgebnis an der Anzeigeeinrichtung (13) wiedergebbar ist,
c) daß eine Einrichtung zum Einschreiben von Auswerte-Ergebnissen in vorgegebene Bereiche einer Speicherkarte vorhanden ist,
d) daß eine Inkompatibilitäts-Warneinrichtung vorgesehen ist, von welcher bei Inkompatibilität eines gewogenen Lebensmittels mit einem vorgegebenen Diätplan ein Warnsignal kommt, und
e) daß eine Substitutionstaste (19) vorhanden ist, durch deren Betätigung bei einer Lebensmittel-Inkompatibilität eine Auswahl von substituierbaren Lebensmitteln abrufbar ist.

2. Lebensmittelwaage nach Anspruch 1,
dadurch **gekennzeichnet,**
daß als eine Lese-Einrichtung ein Laufwerk (27) für eine Compact Disc zur Eingabe von Kochrezepten vorhanden ist und
daß die Auswerteeinheit zum Auswerten eingegebener Kochrezepte nach den Kriterien des angewählten Diätplanes ausgebildet ist.

3. Lebensmittelwaage nach einem der vorhergehenden Ansprüche,
dadurch **gekennzeichnet,**
daß die Auswertung eines gewogenen Lebensmittels unter Berücksichtigung verschiedener Diätpläne durchführbar ist.

4. Lebensmittelwaage nach Anspruch 3,
dadurch **gekennzeichnet,**
daß an der Anzeigeeinrichtung (13) eine Angabe über die den unterschiedlichen Diätplänen entsprechenden Portionsgrößen wiedergegeben ist.

5. Lebensmittelwaage nach einem der vorhergehenden Ansprüche,
dadurch **gekennzeichnet,**
daß die Anzeigeeinrichtung (13) ein LCD-Bildschirm ist.

6. Lebensmittelwaage nach einem der vorhergehenden Ansprüche,
dadurch **gekennzeichnet,**
daß eine Auswahlvorrichtung vorgesehen ist, die als Tastenfeld ausgebildet ist.

7. Lebensmittelwaage nach Anspruch 6,
dadurch **gekennzeichnet,**
daß das Tastenfeld als Folientastatur ausgebildet ist.

8. Lebensmittelwaage nach einem der vorhergehenden Ansprüche,
dadurch **gekennzeichnet,**
daß eine Produktvorwahltaste (20) vorgesehen ist, mit der die Lebensmittel gattungsmäßig vorwählbar sind.

9. Lebensmittelwaage nach einem der vorhergehenden Ansprüche,
dadurch **gekennzeichnet,**
daß eine Scrolltaste (14) zur Lebensmittelauflistung einschließlich unterschiedlicher Zubereitungsarten auf der Anzeigeeinrichtung (13), insbesondere einem Bildschirm, vorgesehen ist.

## Claims

1. Electronic foodstuff balance with an evaluating unit through which from the weights of the weighed foodstuffs their energy values can be determined, comprising a display (13), an input device (14, 15, 16, 17, 18, 19, 20, 21, 22, 24, 25, 26) for inputting the foodstuffs to be weighed, an electronic memory in which the energy values of the plurality of foodstuffs and a plurality of diet plans are stored, so that the diet plans can be reproduced on the display (13) for selection by a user, a comparator with which the energy values of the weighed foodstuffs can be compared with energy values from the diet plans and which are to be respected by a specific person, an overweight warning device through which is indicated the exceeding of a weight limit provided in the diet plan, and a reader for inputting data, and a recorder for outputting data,
**characterized** in that
a) in addition to the energy values the electronic memory stores further nutrition-relevant parameters such as nutrient values of cholesterol, proteins, vitamins and/or minerals,
b) through the evaluating unit it is possible to determine the compatibility of a weighed foodstuff with a corresponding foodstuff in one or more selected diet plans and the evaluation result can be reproduced on the display (13),
c) a device is provided for inputting evaluation results into the provided areas of a smart card,
d) an incompatibility warning device is provided, which gives a warning signal in the case of an incompatibility of a weighed foodstuff with a predetermined diet plan, and
e) a substitution key (19) is provided, the operation of which in the case of a foodstuff incompatibility permits the polling of a selection of substitutable foodstuffs.

2. Foodstuff balance according to claim 1,
**characterized** in that
there is a drive (27) as reader for a compact disk for inputting cooking recipes, and
that the evaluation unit is constructed to evaluate inputted recipes on the basis of the criteria of the selected diet plan.

3. Foodstuff balance according to one of the preceding claims,
**characterized** in that
the evaluation of a weighed foodstuff takes place whilst taking account of different diet plans.

4. Foodstuff balance according to claim 3,
**characterized** in that
on the display (13) is reproduced information over the helpings corresponding to the different diet plans.

5. Foodstuff balance according to one of the preceding claims,
**characterized** in that
the display (13) is a LCD screen.

6. Foodstuff balance according to one of the preceding claims,
**characterized** in that
a selection device in the form of a keyboard is provided.

7. Foodstuff balance according to claim 6,
**characterized** in that
the keyboard is constructed as a film keyboard.

8. Foodstuff balance according to one of the preceding claims,
**characterized** in that
a product preselection key (20) is provided, which permits the preselection of the foodstuff type.

9. Foodstuff balance according to one of the preceding claims,
**characterized** in that
a scroll key (14) for foodstuff listing, including different modes of preparation, on the display (13), in particular a screen, is provided.

## Revendications

1. Balance alimentaire électronique comprenant une unité d'analyse, par laquelle, à partir des poids des aliments pesés, leurs valeurs énergétiques peuvent être déterminées, un dispositif d'affichage (13), un dispositif de saisie (14, 15, 16, 17, 18, 19, 20, 21, 22, 24, 25, 26) pour entrer l'aliment à peser, une mémoire électronique, dans laquelle sont stockés les valeurs énergétiques d'une pluralité d'aliments et une pluralité de programmes de régimes alimentaires, de telle sorte que les programmes de régimes puissent être renvoyés sur le dispositif d'affichage (13) à des fins de sélection par un utilisateur, un dispositif comparateur avec lequel les valeurs énergétiques des aliments pesés peuvent être comparées à des valeurs énergétiques provenant de programmes de régime qui doivent être respectés par une personne donnée, un dispositif d'alarme de dépassement de poids par lequel un dépassement d'une limite de poids prévue dans un programme de régime est indiqué, et un dispositif de lecture pour lire et un dispositif d'écriture pour éditer des données, ***caractérisée en ce que***
a) dans la mémoire électronique sont stockés, outre les valeurs énergétiques, d'autres paramètres relatifs à la nutrition comme le cholestérol, les protéines, les vitamines et/ou les éléments minéraux,
b) la compatibilité d'un aliment pesé avec un aliment correspondant dans un ou plusieurs programmes de régime sélectionnés peut être déterminée par l'unité d'analyse et le résultat de l'analyse peut être renvoyé sur le dispositif d'affichage (13),
c) un dispositif est prévu pour écrire des résultats d'analyse dans des zones déterminées d'une carte à mémoire,
d) un dispositif d'alarme d'incompatibilité est prévu, duquel provient un signal d'alarme en cas d'incompatibilité d'un aliment pesé avec un programme de régime prédéterminé, et
e) une touche de substitution (19) est présente, dont l'action permet, en cas d'incompatibilité d'un aliment, d'appeler une sélection d'aliments substituables.

2. Balance alimentaire selon la Revendication 1, ***caractérisée en ce que,*** comme dispositif de lecture, un lecteur (27) de disques compacts est présent pour entrer des recettes de cuisine et ***en ce que*** l'unité d'analyse est conformée pour analyser des recettes de cuisine selon les critères du programme de régime sélectionné.

3. Balance alimentaire selon l'une quelconque des Revendications précédentes, ***caractérisée en ce que*** l'analyse d'un aliment pesé s'effectue en tenant compte de différents programmes de régime.

4. Balance alimentaire selon la Revendication 3, ***caractérisée en ce que*** sur le dispositif d'affichage (13) est renvoyée une indication sur les tailles de portion correspondant aux divers programmes de régime.

5. Balance alimentaire selon l'une quelconque des Revendications précédentes, ***caractérisée en ce que*** le dispositif d'affichage (13) est un écran à cristaux liquides.

6. Balance alimentaire selon l'une quelconque des Revendications précédentes, ***caractérisée en ce qu'***un dispositif de sélection est prévu, qui prend la forme d'un pavé de touches.

7. Balance alimentaire selon la Revendication 6, ***caractérisée en ce que*** le pavé de touches prend la forme d'un clavier à effleurement.

8. Balance alimentaire selon l'une quelconque des Revendications précédentes, ***caractérisée en ce qu'***une touche (20) de présélection de produit est prévue, avec laquelle les aliments peuvent être présélectionnés par famille.

9. Balance alimentaire selon l'une quelconque des Revendications précédentes, ***caractérisée en ce qu'***une touche de défilement (14) est prévue pour lister les aliments ainsi que différents types de préparation sur le dispositif d'affichage (13), en particulier sur un écran.
